# EUROPÄISCHE PATENTSCHRIFT

(11) **EP 4 152 111 B1**
(45) Veröffentlichungstag und Bekanntmachung des Hinweises auf die Patenterteilung: **13.08.2025**
(21) Anmeldenummer: 22180618.5
(22) Anmeldetag: 23.06.2022
(51) Int. Cl.: G05B 19/401, G05B 19/418, G01B 5/008

(54) **VERFAHREN ZUM EINMESSEN EINES WERKSTÜCKS IN EINER WERKZEUGMASCHINE**
METHOD FOR MEASURING A WORKPIECE IN A MACHINE TOOL
PROCÉDÉ DE MESURE D'UNE PIÈCE DANS UNE MACHINE-OUTIL

(30) Priorität: 17.09.2021 DE 102021210329
(43) Veröffentlichungstag der Anmeldung: 22.03.2023
(73) Patentinhaber: Dr. Johannes Heidenhain GmbH, 83301 Traunreut (DE)
(72) Erfinder: ZIMMERMANN, Dr. Robert, 83278 Traunstein (DE); GÜNTHER, Gero, 83376 Truchtlaching (DE); HAJDUK, Bernhard, 83301 Traunreut (DE); GAISSER, Dr. Martin, 83339 Chieming (DE); HUBER, Stefan, 83374 Traunwalchen (DE); JUNG, Dr. Sebastian, 83349 Palling (DE)

(56) Entgegenhaltungen:
- WO-A1-2016/169589
- DE-A1- 102005 037 837
- DE-A1- 102019 007 348
- US-A- 5 208 763
- US-A- 5 465 221

## Beschreibung

### GEBIET DER TECHNIK

Die vorliegende Erfindung betrifft ein Verfahren zum Einmessen eines Werkstücks und/oder seiner Spannmittel in einer Werkzeugmaschine. Dabei wird die Lage des Koordinatensystems des Werkstücks relativ zum Koordinatensystem der Werkzeugmaschine festgestellt, so dass mit der programmgesteuerten Bearbeitung des Werkstücks begonnen werden kann.

### STAND DER TECHNIK

Das Ausrichten des Koordinatensystems eines Werkstücks zum Koordinatensystem einer Werkzeugmaschine gewinnt bei der CNCgesteuerten Bearbeitung von Werkstücken zunehmend an Bedeutung. Insbesondere bei endkonturnahen Rohteilen, die beispielsweise durch Feinguss oder mittels additiver Prozesse hergestellt wurden, oder die durch vorherige Bearbeitungsschritte in anderer Aufspannung und/oder auf anderen Maschinen bearbeitet wurden, ist die Erfassung der Ausrichtung wichtig. Es genügt dabei meist, die tatsächliche Lage des Werkstücks (im Sinne einer Abweichung von der idealen Lage gemäß der Erwartung eines NC-Programmes) relativ zur Werkzeugmaschine zu kennen, so dass bei einer folgenden Bearbeitung die Abweichung von einer idealen Lage über Koordinatentransformationen bei der Bearbeitung mittels eines NC-Programms berücksichtigt werden kann.

Sollen die Spannmittel, die zum Befestigen des Werkstücks im Bearbeitungsraum der Werkzeugmaschine dienen, beispielsweise für eine Kollisionsüberwachung während des Bearbeitungsvorganges berücksichtigt werden, so müssen die Spannmittel ebenso wie das Werkstück betrachtet werden. Sowohl vom Werkstück als auch vom Spannmittel müssen geometrische Modelle vorliegen, deren Koordinatensysteme zum Koordinatensystem der Werkzeugmaschine auszurichten sind. Da für die folgenden Betrachtungen eine Unterscheidung zwischen Spannmittel und Werkstück nicht nötig ist, seien im Folgenden mit dem Begriff Werkstück auch die Spannmittel des Werkstücks umfasst, und es ist auch möglich, das erfindungsgemäße Verfahren zum Einmessen eines Spannmittels (ohne eingespanntes Werkstück) zu verwenden. Für den Ablauf des Verfahrens ist es völlig unerheblich, ob ein Spannmittel, ein zu bearbeitendes Werkstück oder beides gemeinsam eingemessen werden soll.

Moderne Numerische Steuerungen verfügen heute über eine grafische Bedienoberfläche (GUI), welche einen Blick in einen virtuellen Arbeitsraum einer Werkzeugmaschine ermöglicht. Auf einem Bildschirm wird beispielsweise in einer Simulation das Werkstück auf einem Tisch dargestellt, wobei die Maschinenachsen (z.B. lineare und rotatorische Achsen einer 5-Achs-Maschine) gemäß ihrem aktuellen Zustand dargestellt sind. Schon beim Aufspannen eines Werkstücks kann ein Bediener durch Vergleich der virtuellen Darstellung mit der realen Aufspannung dafür sorgen, dass die Lage des Werkstücks (und damit gegebenenfalls auch seiner Spannmittel) im Arbeitsraum ungefähr den Annahmen des NC-Programms entspricht. Kleine Abweichungen in den einzelnen Freiheitsgraden können dann ausgemessen und durch Koordinatentransformationen bei der Abarbeitung eines NC-Programms berücksichtigt werden. Oft ist bereits durch die Aufspannung ein Freiheitsgrad genau bekannt, etwa durch eine plane Fläche des Werkstücks, mit der dieses Werkstück auf dem Maschinentisch aufgesetzt wird. Die Lage des Werkstücks ist damit senkrecht zum Tisch und bezüglich der Rotationen um die in der Tischebene liegenden Richtungen genau definiert und muss nicht durch Antasten ermittelt werden.

Das Einmessen bzw. Feststellen der Lage eines Werkstücks erfolgt meist durch Antasten des Werkstücks mit einem Taster, der beispielsweise in den Werkzeughalter an der Spindel der Werkzeugmaschine eingewechselt sein kann. Hierzu wird der Taster mittels der beweglichen Achsen der Werkzeugmaschine an zuvor festgelegte Punkte des Werkstücks gefahren und der Antastpunkt registriert. Die Koordinaten des Antastpunktes in einem kartesischen Koordinatensystem können dabei aus der Kinematik der Werkzeugmaschine, den Achspositionen im Moment der Antastung und der Geometrie des Tasters berechnet werden.

So kann beispielsweise die Lage einer Fläche des Werkstücks durch Antasten von drei Punkten festgestellt werden. Entlang dieser Fläche ist die Verschiebung des Werkstücks noch nicht bekannt. Durch Antasten verschieden ausgerichteter, auch gekrümmter Flächen oder allgemeiner Bereiche eines Werkstücks kann die Lage des Werkstücks in allen sechs Freiheitsgraden bestimmt werden. Dies können die drei oft mit X, Y, Z bezeichneten linearen und aufeinander senkrecht stehenden Raumrichtungen sein, und die jeweiligen Rotationen A, B, C um diese Raumrichtungen. Verschiedene mathematische Verfahren, wie anhand von gemessenen Punkten eines Körpers dessen Lage bestimmt werden kann, sind beispielsweise im Aufsatz "A Method for Registration of 3D-Shapes" von Paul J. Besl und Neil D. McKay beschrieben (IEEE Transactions on Pattern Analysis and Machine Intelligence, Vol. 14, No. 2, Feburary 1992).

Die DE 102008045678 A1 offenbart eine numerische Steuerung für eine Werkzeugmaschine, die zur vorausschauenden Überwachung von zueinander beweglichen Teilen der Werkzeugmaschine auf drohende Kollisionen eingerichtet ist. Die Überwachung beruht dabei auf einer geometrischen und kinematischen Beschreibung der Werkzeugmaschine. In die Überwachung sind auch Spannmittel zum Befestigen eines Werkstücks auf einem Werkstücktisch einbezogen, indem in der numerischen Steuerung Spannmittelbeschreibungen hinterlegt sind, die die tatsächlich in einem Bearbeitungsraum der Werkzeugmaschine vorhandenen Spannmittel so beschreiben, dass sie ein Bestandteil der geometrischen und kinematischen Beschreibung der Werkzeugmaschine sind. Es sind zudem für jedes Spannmittel Antastzyklen gespeichert, die die Antastpunkte zum Feststellen der Lage des Spannmittels festlegen. Das Bereithalten solcher Spannmittelbeschreibungen inklusive eines Antastzyklus stellt allerdings einen gewissen Aufwand dar, der nicht in jedem Fall gerechtfertigt ist. Bezogen auf das Einmessen eines Werkstücks wäre es bei einem Einzelstück sehr aufwändig, solche Daten zu generieren und auf einer Numerischen Steuerung vorzuhalten. Wenn außerdem ein Antastpunkt im vorgegebenen Antastzyklus wegen einer lokalen Beschädigung nicht zu verwenden ist, scheitert das Einmessen.

Die US 5208763 A offenbart neben einer automatisierten Einmessung der Lage eines Werkstücks, von dem ein Modell vorliegen muss, auch einen interaktiven Modus, gemäß dem ein Benutzer zunächst eine anzutastende Fläche im Modell auswählt, sodann einen Taster zur entsprechenden Stelle am Werkzeug führt und diese antastet. Sind ausreichend Messpunkte auf diese Weise ermittelt, wird anhand einer Minimierung der Quadrate der Abweichungen zwischen der angenommenen Lage des Werkstücks und der gemessenen Lage für alle Messpunkte die tatsächliche Lage ermittelt. Hierfür muss aber ein Bediener viel Erfahrung und Wissen mitbringen, um zunächst geeignete Punkte auszuwählen, die nach der Messung eine ausreichend genaue Bestimmung der Lage des Werkstücks für alle Freiheitsgrade ermöglicht.

Die WO 2016169589 A1 offenbart ein Koordinatenmessgerät mit Messkopf, mittels dem ein Benutzer computergestützt einen Messablauf an bereitgestellten Modelldaten mit akzeptablen Soll-Eigenschaften in Form von Fertigungstoleranzen vornimmt. Der Benutzer erstellt zunächst manuell einen kompletten Messablauf zum Steuern des Messkopfes in Abhängigkeit von Prüfmerkmalen, welcher anschließend computergestützt optimiert wird. Dabei werden die die Geometrie beschreibenden Zahlenwerte jeweils abgeändert, so dass diese eine Messunsicherheit aufweisen und um einen definierten Betrag kleiner sind als die akzeptablen Fertigungstoleranzen der Modelldaten.

Die DE 10 2019 007348 A1 offenbart eine Messprogramm-Auswahlunterstützungs-Vorrichtung, welche eine Bedienperson beispielsweise bei der Auswahl eines Messprogramms während eines Messvorgangs mit einem Messtaster unterstützt, indem diesem über eine Mixed-Reality-Anzeige zusätzliche Informationen vermittelt werden. Hierzu werden die virtuellen Anzeigeinformationen mit den Bilddaten des realen Raums überlagert.

### ZUSAMMENFASSUNG DER ERFINDUNG

Es ist daher Aufgabe der Erfindung, ein verbessertes Verfahren zum Einmessen der Lage eines Werkstücks anzugeben, das einen Bediener einer Werkzeugmaschine möglichst gut bei der Wahl anzutastender Punkte unterstützt, das keine oder nur wenig besondere Vorkenntnisse des Bedieners erfordert, und das den Aufwand zum Einmessen im Vergleich zum Stand der Technik reduziert.

Diese Aufgabe wird gelöst durch ein Verfahren gemäß Anspruch 1. Vorteilhafte Details dieses Verfahrens ergeben sich auch aus den von Anspruch 1 abhängigen Ansprüchen.

Es wird ein Verfahren zum Einmessen eines Werkstücks in einer Werkzeugmaschine offenbart. Mit diesem Verfahren wird ein Bediener einer

Werkzeugmaschine darin unterstützt, mittels eines Tasters ein Werkstück und/oder ein Spannmittel im Arbeitsraum der Werkzeugmaschine so einzumessen, dass das auf einem Bildschirm einer Numerischen Steuerung angezeigte Modell des Arbeitsraumes hinreichend gut mit der Realität übereinstimmt. Hierzu kann der Bediener den Taster frei um das Werkstück bewegen und bekommt automatisiert gewählte Antastpunkte zusammen mit einer Qualitätsinformation angezeigt. Ist die Qualität ausreichend, kann der Bediener per Tastendruck einen Antastvorgang auslösen und bekommt umgehend Rückmeldung zum Fortschritt des Einmessvorganges.

Genauer gesagt wird ein Verfahren zum Einmessen eines Werkstücks im Arbeitsraum einer Werkzeugmaschine mit Numerischer Steuerung mittels eines Tasters offenbart, mit den Schritten:
1: Bereitstellen von 3D-Modellen des Arbeitsraumes, des Tasters und des Werkstücks und Darstellen dieser Modelle als virtuelles Werkstück und virtueller Taster in einem virtuellen Arbeitsraum auf einem Bildschirm der Numerischen Steuerung,
2: Positionieren des Werkstücks im Arbeitsraum der Werkzeugmaschine und des virtuellen Werkstücks im virtuellen Arbeitsraum, so dass eine Lage des Werkstücks im Arbeitsraum und die Lage des virtuellen Werkstücks im virtuellen Arbeitsraum eine initiale Übereinstimmung aufweisen,
3: manuelles Positionieren des Tasters relativ zum Werkstück, dabei automatisierte Auswahl eines geplanten Antastpunktes und einer Antastrichtung basierend auf einem minimalen Abstand des virtuellen Tasters zum virtuellen Werkstück, und Darstellung des geplanten Antastpunktes und der Antastrichtung im virtuellen Arbeitsraum,
4: Bestimmen einer Qualität des geplanten Antastpunktes und Freigabe des Antastens bei ausreichender Qualität, wobei die Qualität z.B. anhand der lokalen Krümmung des Werkstücks am Antastpunkt bestimmt wird,
5: Auslösen des Antastens bei freigegebenem Antasten und Bestimmen von Koordinaten des Antastpunktes,
6: Neuberechnung der Lage des Werkstücks mittels der Koordinaten des Antastpunktes und Aktualisierung der Lage des virtuellen Werkstücks im virtuellen Arbeitsraum,
7: Wiederholen der Schritte 3 - 6, bis eine finale Übereinstimmung der Lage des virtuellen Werkstücks im virtuellen Arbeitsraum mit der Lage des Werkstücks im Arbeitsraum erreicht ist.

Im Schritt 1 muss für die Aufspannsituation im Arbeitsraum der Werkzeugmaschine ein passendes Modell zur Verfügung gestellt werden. Für die unveränderlichen Bestandteile der Werkzeugmaschine, wie für den Tisch, für die Werkzeugspindel und für die Begrenzungen des Arbeitsraumes liegen diese Modelle üblicherweise vor und sind für alle Bearbeitungen mit dieser Werkzeugmaschine gleich. Für das Werkstück (und seine Spannmittel) lassen sich solche Modelle aus CAD-Daten oder über aufbereitete 3D-Scans gewinnen und liegen oft in gängigen Formaten wie STL oder STEP vor. Damit wird ein Werkstück als Polyeder beschrieben, der aus geradlinig begrenzten Flächenelementen (meist Dreiecke) zusammengesetzt ist. Die Flächenelemente des Polyeders weisen ein Flächennormal auf, die Eckpunkte Vertex-Normale, welche die Normalenrichtung des realen Körpers an diesem Punkt annähern. Vertex-Normale sind meist Bestandteil von CAD Daten, alternativ können sie als gemittelte Richtung der angrenzenden Flächen approximiert werden.

Die Oberfläche des Polyeders kann als Polygonnetz (auch als Mesh bezeichnet) beschrieben werden. Damit können also beliebig geformte Oberflächen eines Körpers so beschrieben werden, dass Dinge wie Oberflächennormale, Vertex-Normale, lokale Krümmung der Oberfläche und Abstände zu anderen Körpern performant berechnet werden können. Dabei sollte das Mesh - wie jeder reale, volumenbehaftete Körper - eine geschlossene Oberfläche aufweisen, also "wasserdicht" sein.

Auch vom verwendeten Taster muss ein Modell vorliegen. Der Taster wird meist ein kalibrierter, schaltender Taster sein, der nach dem Antasten des Werkstücks und einer kleinen (bekannten) Auslenkung der Tastkugel ein Signal abgibt, worauf hin die Stellungen aller Maschinenachsen ausgelesen werden. Daraus und anhand der bekannten Maschinenkinematik und anhand der beispielsweise in der Werkzeugtabelle hinterlegten Taster-Geometrie können die Koordinaten des Antastpunktes berechnet werden. Die Verwendung eines messenden Tasters, der den Betrag seiner Auslenkung ausgeben kann, ist mit etwas mehr Rechenaufwand ebenso möglich. Statt einer Tastkugel sind auch andere Antastkörper möglich, beispielsweise Scheiben oder Zylinder.

Die bereitgestellten Modelle werden zusammen mit den relevanten Bestandteilen der Werkzeugmaschine als Simulationsgrafik auf dem Bildschirm einer Numerischen Steuerung angezeigt, und ermöglichen so einen virtuellen Blick in den Arbeitsraum der Werkzeugmaschine. So eine Anzeige ist auf modernen Steuerungen inzwischen üblich und ermöglicht einen Blick auf die Bearbeitung z.B. auch dann, wenn beispielsweise durch Kühlschmierstoffe die Sicht im realen Bearbeitungsraum behindert wird, oder wenn die Steuerung so platziert ist, dass keine Sicht in den Arbeitsraum möglich ist.

Im Schritt 2 muss nun die Lage (also z.B. die Position des Zentrums und die Ausrichtung der Werkstückachsen) des Werkstücks im Arbeitsraum mit der Lage des virtuellen Werkstücks im virtuellen Arbeitsraum so weit in eine initiale Übereinstimmung gebracht werden, dass im weiteren Verfahren sinnvoll angetastet werden kann. Hierzu kann der Bediener einerseits versuchen, das Werkstück im Arbeitsraum so aufzuspannen, wie es im virtuellen Arbeitsraum, angezeigt auf dem Bildschirm der Numerischen Steuerung, vorgegeben ist. Umgekehrt ist es auch möglich, das Werkstück in den Arbeitsraum einzubringen und dann das virtuelle Werkstück mit der realen Aufspannung in Einklang zu bringen. Mittels Richtungstasten oder anderer Eingabegeräte kann das virtuelle Werkstück am Bildschirm so verschoben und gedreht werden, dass es möglichst gut mit der Realität übereinstimmt. Auch ein zwei- oder mehrstufiger Prozess mit beiden Methoden kann zum Ziel führen. Zur räumlichen Orientierung dienen beispielsweise T-Nuten auf dem Tisch der Werkstückmaschine, die ein grobes Positionieren des Werkstücks - real oder virtuell - ermöglichen. In Tests hat es sich bewährt, als Orientierungshilfe den Taster im Arbeitsraum gegenüber einer markanten Stelle des Werkstücks zu positionieren, und dann das virtuelle Werkstück mittels der Richtungstasten der Steuerung zum virtuellen Taster entsprechend auszurichten.

Es sollte eine initiale Übereinstimmung oder Genauigkeit erreicht werden, die beispielsweise so definiert werden kann, dass kein Punkt des Werkstücks von seinem virtuellen Gegenstück mehr als wenige Zentimeter entfernt ist. Als Faustregel kann auch gelten, dass die halbe Ausdehnung des kleinsten zu messenden Elements des Werkstücks als initiale Übereinstimmung angestrebt werden sollte, also beispielsweise der halbe Durchmesser einer Bohrung, die zum Einmessen des Werkstücks angetastet werden soll.

Tastet man im weiteren Verlauf des Verfahrens das Werkstück an, so ergibt sich daraus eine gewisser Toleranzbereich oder Erwartungsbereich, innerhalb dem ein Tastereignis registriert werden sollte. Wird im weiteren Verlauf des Verfahrens ein Tastereignis zu früh oder nicht innerhalb des Toleranzbereichs erkannt, so deutet dies auf eine zu große Abweichung zwischen der realen Aufspannung und der virtuellen Abbildung davon. Es kann dann mit einer entsprechenden Fehlermeldung reagiert und die initiale Übereinstimmung zunächst weiter verbessert werden, im Sinne eines Rücksprungs zu Schritt 2.

Im Schritt 3 wird der Taster vom Bediener im Arbeitsraum positioniert. Hierfür kann der Taster mittels Richtungstasten, per Handrad oder sonstigen Eingabegeräten im Arbeitsraum bewegt werden, wobei diese Bewegung auch im virtuellen Arbeitsraum nachvollzogen und auf dem Bildschirm der Steuerung dargestellt wird. Um nicht direkt zugängliche Bereiche des Werkstücks zu erreichen, können dazu beispielsweise auch Winkelachsen des der Maschine bewegt werden, um das Werkstück oder den Taster zu kippen. Funktionen, die dabei den Abstand des Werkzeugs (in diesem Fall des Tasters) zum Werkstück konstant halten, sind dabei sehr nützlich. Auch eine Kollisionsüberwachung kann dabei unterstützen, selbst wenn die Position des Werkstücks noch nicht mit optimaler Genauigkeit bekannt ist. Kollisionen des Tasters mit anderen Maschinenelementen können dennoch zuverlässig erkannt werden, denn deren Positionen sind jederzeit bekannt.

Letztlich bewegt der Bediener den Taster in die Nähe von Bereichen des Werkstücks, die für eine Antastung sinnvoll erscheinen. Die Steuerung berechnet dabei kontinuierlich einen Antastvektor von der Tastkugel auf das Werkstück. Damit ist eine Antastrichtung vorgegeben, und ein (geplanter) Antastpunkt auf dem Werkstück. Diese Berechnung erfolgt, indem jeweils der kürzeste Abstand zwischen dem Mesh der Tastkugel und dem Mesh des Werkstücks (also zwischen den virtuellen Abbildern von Tastkugel und Werkstück) ermittelt wird. Für diese Berechnung existieren sehr schnelle numerische Verfahren (z.B. Bounding Volume Hierarchy), so dass der Antastvektor in kleinen zeitlichen Abständen von z.B. 20 Millisekunden berechnet und dargestellt werden kann. Der Bediener sieht so jederzeit auf dem Bildschirm, welcher Antastpunkt gerade anvisiert wird, und kann die Positionierung des Tasters anpassen.

Im Schritt 4 wird nun kontinuierlich die Qualität des Antastpunktes berechnet und das Antasten nur unter der Bedingung freigegeben, dass diese Qualität ausreichend ist. Die Qualität berücksichtigt beispielsweise die Messgenauigkeit, falsche Tastrichtungen sowie den Sehnenfehler der Modellierung. Zum Antastpunkt kennt man die einschließende Fläche, deren Nachbarflächen und deren Vertex- und Flächennormal.

Für eine hohe Messgenauigkeit muss man möglichst senkrecht auf das Werkstück antasten: Kanten und zu stark gekrümmte Oberflächen müssen vermieden werden. Dazu kann man die Winkel zwischen den Flächennormalen in der Nähe des Antastpunktes und dem Antastvektor betrachten, diese sollten jedenfalls kleiner als 30 Grad sein, bevorzugt kleiner 20 Grad oder noch besser kleiner 10 Grad. Der Ausdruck "in der Nähe" ist in diesem Zusammenhang beispielsweise so zu verstehen: Betrachtet werden alle Flächenelemente, die in einem Bereich um den Antastpunkt liegen, dessen Durchmesser dem des Antastkörpers zuzüglich der noch vorhandenen Unsicherheit der Ausrichtung des Werkstücks entspricht. Alternativ können auch einfach die unmittelbar benachbarten Flächenelemente des angetasteten Flächenelements betrachtet werden. Große Abweichungen zwischen den Flächennormalen und dem Antastvektor deuten auf eine stark gekrümmte Oberfläche oder sogar auf eine Kante im Werkstück hin. Der lokale Krümmungsradius kann anhand der den Antastpunkt einschließenden Flächen und deren Vertex-Normalen approximiert werden, dieser sollte deutlich größer als der Radius der Tastkugel sein. In Bereichen von großen Krümmungen (und damit kleinen Krümmungsradien) oder gar Kanten ist keine Antastung möglich.

Schon kleine Diskrepanzen zwischen der Realität und der Modellierung können zu großen Unsicherheiten in den berechneten Koordinaten führen. Daher sollten die Tastpunkte in möglichst genau modellierten Regionen des Werkstücks liegen. Da ein Mesh Freiformflächen linearisiert, sind starke Krümmungen mit einem Modellierungsfehler (Sehnenfehler) behaftet und plane Flächen zu bevorzugen. Daher sollten Antastpunkte in solchen Bereichen nicht freigegeben werden.

Ein weiteres Kriterium für die Qualität eines Antastpunktes ist, dass die virtuelle Tastkugel sich außerhalb des virtuellen Werkstücks befinden muss. Schneidet die virtuelle Tastkugel das virtuelle Werkstück, oder befindet es sich gar gänzlich innerhalb des virtuellen Werkstücks, dann ist keine Bestimmung der Antastrichtung möglich und es liegt keinesfalls ein geeigneter Antastpunkt vor.

Wird für die aktuelle Position des Tasters ein Antastvektor aus Antastpunkt und -richtung mit ausreichender Qualität festgestellt, so wird dies dem Bediener signalisiert. Eine gute Methode hierfür ist die Darstellung des Antastvektors in roter Farbe, wenn die Qualität nicht ausreichend ist, und in grüner Farbe, wenn die Qualität ausreichend und die Antastung damit freigegeben ist. Das Anzeigen eines Antastvektors erst dann, wenn die Qualität ausreichend ist, kann eine andere Methode sein, oder das Durchstreichen des Antastvektors oder das Anzeigen einer Warnung neben dem Antastvektor bei nicht ausreichender Qualität eine andere. Auch ein Haken neben dem Antastvektor als Zeichen für ausreichende Qualität und Freigabe des Antastens sind für den Bediener intuitiv zu verstehen.

Die Schritte 3 und 4 laufen in einer Art Schleife kontinuierlich nacheinander oder auch gleichzeitig bzw. parallel ab, wobei der angezeigte Antastvektor während dem Bewegen des Tasters im Schritt 3 durchaus mehrmals zwischen ausreichender Qualität und nicht ausreichender Qualität wechseln kann - je nach Ergebnis im Schritt 4. Ein Antastvorgang findet dabei noch nicht statt.

Dieser Prozess endet, wenn im Schritt 5 vom Bediener eine Antastung ausgelöst wird. Bedingung dafür ist, dass die Antastung in diesem Moment freigegeben ist. Dann kann der Bediener mittels eines Tastendrucks oder über andere Eingabemittel den Antastvorgang entlang des aktuellen Antastvektors auslösen. Eine Taste mit einer Start - Funktionalität findet sich auf jeder Numerischen Steuerung einer Werkzeugmaschine, um abhängig vom Kontext bestimmte Vorgänge zu starten. Diese Start-Taste bietet sich auch in diesem Zusammenhang an.

Mit der Antastung kann die Steuerung in herkömmlicher Weise die Koordinaten des Antastpunktes bestimmen und für die weitere Verarbeitung zur Verfügung stellen. Liegt der Antastpunkt nicht innerhalb des erwarteten Bereichs, oder wird nach einer gewissen Strecke kein Antastpunkt registriert, wird das Verfahren mit einer Fehlermeldung abgebrochen. Die Übereinstimmung der realen Aufspannung mit der virtuellen Aufspannung ist dann nicht genau genug, und damit auch die Berechnung der Qualität eines (geplanten) Antastpunktes nicht mehr zuverlässig. Das Verfahren sollte dann von Beginn an bzw. von Schritt 2 an neu gestartet werden.

Wurde im Schritt 5 eine Antastung ausgelöst und Koordinaten des Antastpunktes erfolgreich ermittelt, so wird im Schritt 6 die zusätzlich gewonnene Information verarbeitet. Hierzu wird die Lage des virtuellen Werkstücks so neu berechnet, dass die durch die erhaltenen Koordinaten des Antastpunktes zusätzlich gewonnenen Lageinformationen berücksichtigt werden. Ein einfaches Beispiel wäre ein Antastpunkt auf einer durch die Y- und Z-Richtung aufgespannten Fläche des Werkstücks, die in X-Richtung angetastet wird: Mit der X-Koordinate des Antastpunktes lässt sich nun die Lage des virtuellen Werkstücks wesentlich genauer bestimmen als durch die anfänglich in Schritt 2 "per Augenmaß" vorgenommene Platzierung des Werkstücks. Schon mit diesem einen Antastpunkt ist die Übereinstimmung der virtuellen Aufspannung mit der realen Aufspannung besser als die initiale Übereinstimmung. Tastet man einen weiteren Punkt auf dieser Fläche an, der in Y-Richtung zum ersten Antastpunkt verschoben ist, lässt sich auch die Drehung des Werkstücks um die Z-Achse bestimmen. Zusätzliche Antastpunkte erhöhen so die Übereinstimmung immer weiter. Generell empfiehlt es sich, Antastpunkte möglichst über das ganze Werkstück zu verteilen, um einen möglichst guten Hebel auf Rotationen zu bewirken.

Im Schritt 6 können dem Bediener außerdem zusätzlich unterstützende Informationen bereitgestellt werden, die den Fortschritt und Güte des ganzen Vorganges anschaulich vermitteln.

Im virtuellen Arbeitsraum wird jeder Antastpunkt dauerhaft angezeigt. Das Werkstück sollte sich dann an alle so visualisierten Antastpunkte anschmiegen. Der Bediener kann so z.B. Abweichungen zwischen Modell und Realität erkennen. Der Abstand aller Antastpunkte zum Modell kann statistisch ausgewertet werden, hier liefert die mittlere quadratische Abweichung eine Aussage über die Güte. Ein Anhaltspunkt ist hier eine Abweichung von ca. 0,5 Millimeter, denn mit dieser Unsicherheit lässt sich z.B. sehr gut eine Kollisionsüberwachung durchführen.

Im Stile einer Ampel kann außerdem farbig dargestellt werden, ob genug Information zur Ermittlung der jeweiligen Raum-Achsrichtungen verfügbar ist. Tastet man ein Objekt z.B. nur in X-Richtung an, so ist es nicht möglich Aussagen über die Z-Komponente zu treffen. Dies kann etwa durch farbig hinterlegte Achsbezeichnungen visualisiert werden mit einem grünen X und einem roten Z. Es ist dann sehr einfach zu erkennen, welche Antastrichtungen noch zu einer Verbesserung des Einmessvorgangs führen können.

Richtungen, die durch die Aufspannsituation bereits festgelegt sind, sollten automatisiert oder durch den Bediener gesperrt werden und in der Fortschrittsanzeige mit grüner Farbe oder ausgegraut dargestellt werden, letzteres als Hinweis, dass diese Achsrichtung nicht am Einmessvorgang beteiligt ist.

Außerdem kann man in einem Diagramm den Verlauf der bestimmten Werkstückposition insgesamt oder pro Koordinate darstellen. Trägt man hier die durch den letzten Tastpunkt noch erzielte Positionsänderung auf, kann man intuitiv erfassen, ob der Einmessvorgang konvergiert. Während die ersten Tastpunkte noch vergleichsweise große Änderungen bzw. Korrekturen bewirken, sollten spätere Tastpunkte nur noch kleine Änderungen bewirken.

Diese Indikatoren (sich anschmiegende virtuelle Antastpunkte, farbig gekennzeichnete Raumrichtungen, Verlauf der pro Antastpunkt erhaltenen Korrekturen) zeigen dem Bediener einzeln oder in Kombination, ob der Antastvorgang abgeschlossen ist oder noch weitere Antastungen an anderen Stellen benötigt werden. Auch eine automatisierte Bewertung dieser Kriterien ist möglich, so dass das Erreichen der finalen Übereinstimmung ohne Mitwirkung des Bedieners erkannt und das Verfahren beendet werden kann.

Im letzten Schritt 7 findet also eine Entscheidung statt, ob die erreichte Übereinstimmung der virtuellen Lage des Werkstücks mit der tatsächlichen Lage genau genug ist, ob also die finale Übereinstimmung erreicht ist. Ist dies der Fall, endet das Verfahren zum Einmessen eines Werkstücks, ist dies noch nicht der Fall, wird zum Schritt 3 verzweigt und ein weiterer Antastpunkt gesucht.

An dieser Stelle sei nochmals darauf verwiesen, dass mit dem Begriff Werkstück das eigentlich zu bearbeitende Werkstück und/oder ein Spannmittel dafür gemeint ist. Ausdrücklich ist auch der Fall des Einmessens eines Spannmittels ohne zu bearbeitendes Werkstück von dieser Beschreibung des Verfahrens und von den Ansprüchen umfasst.

Es hat sich gezeigt, dass das hier beschriebene Verfahren einen Bediener auf sehr intuitive Weise dabei unterstützt, eine Aufspannsituation in einer Werkzeugmaschine mittels eines Tasters einzumessen. Gegenüber bekannten Verfahren muss kein Aufwand für die Programmierung fester Antastzyklen getrieben werden. Anomalien im Werkstück wie etwa Beschädigungen oder Beschriftungen können beim Antasten ganz einfach ausgespart werden. Das Einmessen beliebig geformter Werkstücke ist auf einfache Weise möglich, wenn nur ein Modell des Werkstücks vorhanden ist. Durch die iterative Rückmeldung über die mit jedem Antastpunkt gewonnene Information bekommt der Bediener gute Hinweise auf weitere Antastpunkte und gewinnt auf diese Weise auch sehr schnell an Erfahrung.

Sehr vereinfachend aber treffend zusammengefasst ermöglichen es die im Hintergrund des Verfahrens automatisiert ablaufenden Schritte einem Bediener einer Werkzeugmaschine, den eigentlich komplexen Vorgang des Einmessens eines Werkstücks zu erledigen, indem ein Taster um das Werkstück herum bewegt wird, um dann bei Freigabe einer Antastung per Starttaste den Antastvorgang auszuführen. Eine Rückmeldung über die dadurch gewonnene Information erfolgt unmittelbar.

Das Verfahren ermöglicht es, auch ungewöhnlich geformte Werkstücke mit Freiformflächen oder auch geneigten Flächen (z.B. Pyramiden) einfach einzumessen. Durch die Verwendung der Rundachsen der Maschine können auch schwer zugängliche Messpunkte ohne zusätzlichen Rechenaufwand für den Bediener mit einfließen.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigen
- Figur 1: eine Werkzeugmaschine mit einer Numerischen Steuerung,
- Figuren 2, 3: die Ausrichtung eines virtuellen Werkstücks in zwei Richtungen,
- Figuren 4, 5: verschiedene zulässige und unzulässige Antastpunkte,
- Figur 6: ein Ablaufdiagram des Verfahrens zum Einmessen eines Werkstücks.

### BESCHREIBUNG DER AUSFÜHRUNGSFORMEN

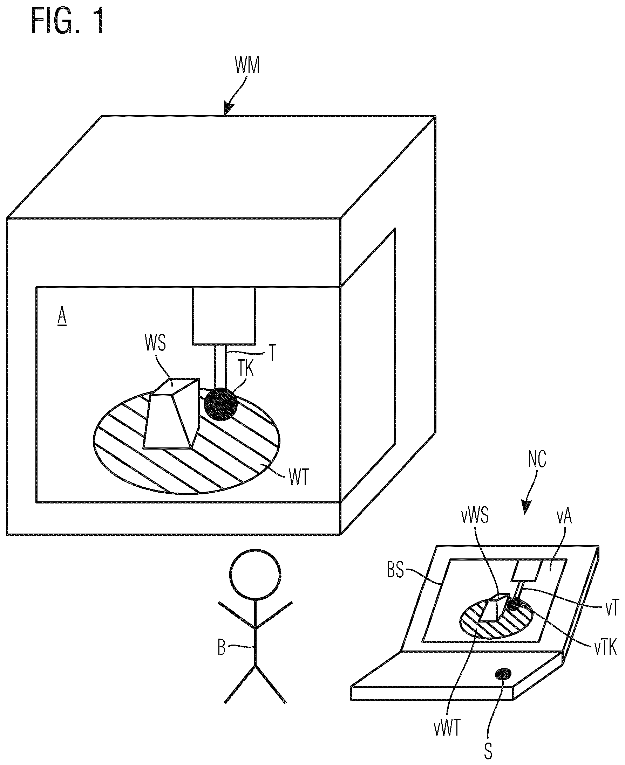

Die Figur 1 zeigt den Blick in den Arbeitsraum A einer Werkzeugmaschine WM. Dort ist ein Werkstück WS auf einem Werkstücktisch WT angeordnet. Die Lage dieses Werkstücks WS soll mittels eines Tasters T durch Antasten des Werkstücks WS mit der Tastkugel TK ermittelt werden. Hierzu steht eine Numerische Steuerung NC zur Verfügung, die auf einem Bildschirm BS einen Blick in einen virtuellen Arbeitsraum vA ermöglicht.

Die für einen Bediener B wichtigen Elemente des Arbeitsraums A sind auch im virtuellen Arbeitsraum vA dargestellt: Der virtuelle Werkstücktisch vWT mit dem virtuellen Werkstück vWS, sowie der virtuelle Taster vT mit virtueller Tastkugel vTK. Hierzu sind gemäß dem oben beschriebenen Schritt 1 die benötigten 3D-Modelle in der Steuerung NC bereitgestellt. Als für das Verfahren zum Einmessen des Werkstücks WS zentrales Bedienelement ist auch eine Starttaste S dargestellt, mit der im Schritt 5 ein Antastvorgang ausgelöst wird.

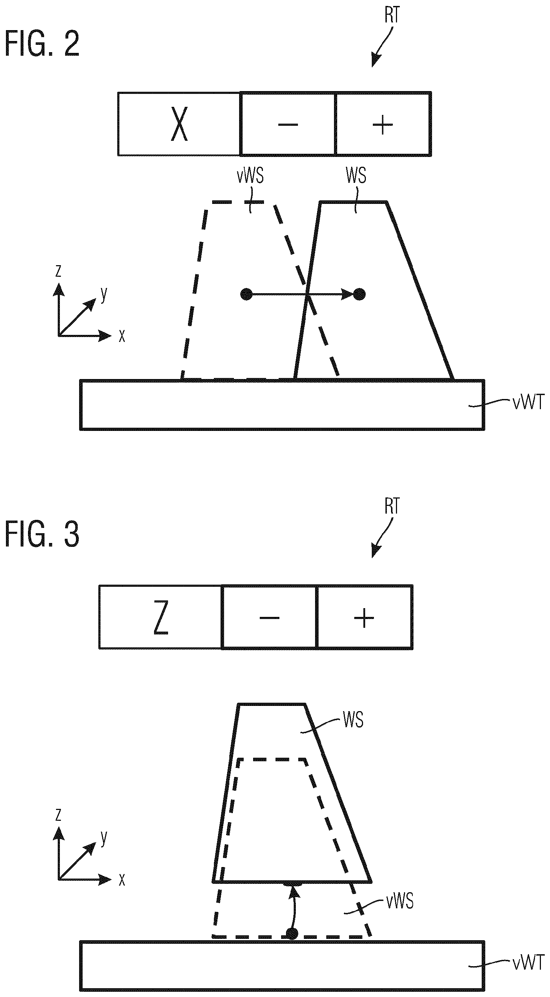

In den Figuren 2 und 3 sind Richtungstasten RT der Numerischen Steuerung NC dargestellt, die die im Schritt 2 des Verfahrens notwendige Positionierung des virtuellen Werkstücks vWS ermöglichen. Durch Betätigung der Richtungstasten der jeweils gewünschten Achsrichtung X, Y, Z kann das virtuelle Werkstück vWS auf dem virtuellen Werkstücktisch vWT so verschoben werden, dass dessen Lage mit dem realen Werkstück WS übereinstimmt. In der Figur 2 wird das virtuelle Werkstück vWS in positive X-Richtung verschoben, in der Figur 3 in die positive Z-Richtung, um das virtuelle Werkstück vWS mit dem realen Werkstück WS in eine initiale Übereinstimmung zu bringen.

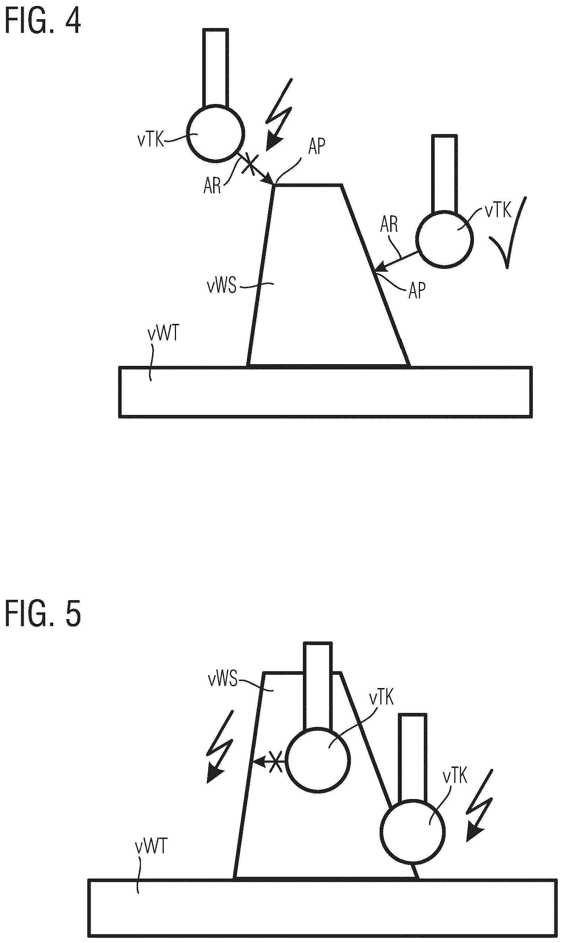

Die Figuren 4 und 5 zeigen die Darstellung auf dem Bildschirm BS während Schritt 3 und 4. In einer Darstellung des virtuellen Tasters vT und des virtuellen Werkstücks vWS wird jeweils der im Schritt 3 bestimmte (geplante) Antastpunkt AP und die Antastrichtung AR angezeigt, sowie ein Hinweis auf die Qualität des Antastpunktes bzw. auf die erfolgte Freigabe des Antastprozesses, etwa mittels Haken- und Blitzsymbolen, durchgestrichenen oder nicht durchgestrichenen Pfeilen, Pfeilen in roter oder grüner Farbe oder auf beliebige andere Art. In der Figur 4 ist ein zulässiger Antastpunkt AP auf eine Fläche des virtuellen Werkstücks vWS dargestellt, sowie ein unzulässiger Antastpunkt AP, der eine Kante des virtuellen Werkstücks vWS betrifft. Die in der Figur 5 dargestellten Tasterstellungen sind beide unzulässig, da sich die virtuelle Tastkugel vTK innerhalb des virtuellen Werkstücks vWS befindet, bzw. dieses schneidet.

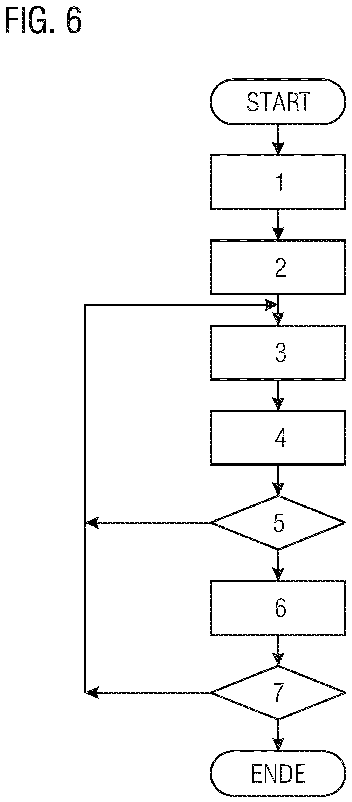

Die Figur 6 zeigt den Ablauf des im allgemeinen Teil beschriebenen Verfahrens mit seinen wesentlichen Schritten 1 - 7:
1: Bereitstellen von 3D-Modellen des Arbeitsraumes A, des Tasters T und des Werkstücks WS und Darstellen dieser Modelle als virtuelles Werkstück vWS und virtueller Taster vT in einem virtuellen Arbeitsraum vA auf einem Bildschirm BS der Numerischen Steuerung NC.
2: Positionieren des Werkstücks WS im Arbeitsraum A der Werkzeugmaschine WM und des virtuellen Werkstücks vWS im virtuellen Arbeitsraum vA, so dass eine Lage des Werkstücks WS im Arbeitsraum A und die Lage des virtuellen Werkstücks vWS im virtuellen Arbeitsraum vA eine initiale Übereinstimmung aufweisen.
3: manuelles Positionieren des Tasters T relativ zum Werkstück WS, dabei automatisierte Auswahl eines geplanten Antastpunktes AP und einer Antastrichtung AR basierend auf einem minimalen Abstand des virtuellen Tasters vT zum virtuellen Werkstück vWS, und Darstellung des geplanten Antastpunktes AP und der Antastrichtung AR im virtuellen Arbeitsraum vA.
4: Bestimmen einer Qualität des geplanten Antastpunktes AP und Freigabe des Antastens bei ausreichender Qualität, wobei die Qualität beispielsweise anhand der lokalen Krümmung des Werkstücks WS am Antastpunkt AP bestimmt wird.
5: Auslösen des Antastens (durch den Bediener B) bei freigegebenem Antasten, Rückmeldung an den Benutzer zum Fortschritt des Einmessvorgangs und Bestimmen von Koordinaten des Antastpunktes AP. Falls die Auslösung noch nicht erfolgt, und stattdessen der Taster T weiter bewegt wird, verzweigt von hier das Verfahren wieder zurück zum Schritt 3.
6: Neuberechnung der Lage des Werkstücks WS mittels der Koordinaten des Antastpunktes AP und Aktualisierung der Lage des virtuellen Werkstücks vWS im virtuellen Arbeitsraum vA.
7: Wiederholen der Schritte 3 - 6, bis eine finale Übereinstimmung der Lage des virtuellen Werkstücks vWS im virtuellen Arbeitsraum vA mit der Lage des Werkstücks WS im Arbeitsraum A erreicht ist.

Die Numerische Steuerung NC ist eingerichtet, dieses Verfahren mit den Schritten 1 bis 7 ablaufen zu lassen, wodurch der Bediener B bei seiner Aufgabe, das Werkstück WS einzumessen, bestmöglich unterstützt wird. Beim eigentlichen Einmessen des Werkstücks sind nur in den Schritten 3 und 5 sehr einfache und intuitive Interaktionen durch den Bediener notwendig, um das gewünschte Ziel zu erreichen.

## Patentansprüche

1. Verfahren zum Einmessen eines Werkstücks (WS) im Arbeitsraum (A) einer Werkzeugmaschine (WM) mit Numerischer Steuerung (NC) mittels eines Tasters (T), mit den Schritten:
(1) Bereitstellen von 3D-Modellen des Arbeitsraumes (A), des Tasters (T) und des Werkstücks (WS) und Darstellen dieser Modelle als virtuelles Werkstück (vWS) und virtueller Taster (vT) in einem virtuellen Arbeitsraum (vA) auf einem Bildschirm (BS) der Numerischen Steuerung (NC),
(2) Positionieren des Werkstücks (WS) im Arbeitsraum (A) der Werkzeugmaschine (WM) und des virtuellen Werkstücks (vWS) im virtuellen Arbeitsraum (vA), so dass eine Lage des Werkstücks (WS) im Arbeitsraum (A) und die Lage des virtuellen Werkstücks (vWS) im virtuellen Arbeitsraum (vA) eine initiale Übereinstimmung aufweisen,
(3) manuelles Positionieren des Tasters (T) relativ zum Werkstück (WS), dabei automatisierte Auswahl eines geplanten Antastpunktes (AP) und einer Antastrichtung (AR) basierend auf einem Abstand des virtuellen Tasters (vT) zum virtuellen Werkstück (vWS), und Darstellung des geplanten Antastpunktes (AP) und der Antastrichtung (AR) im virtuellen Arbeitsraum (vA),
(4) Bestimmen einer Qualität des geplanten Antastpunktes (AP) und Freigabe des Antastens bei ausreichender Qualität, wobei die Qualität wenigstens anhand der lokalen Krümmung des virtuellen Werkstücks (vWS) am geplanten Antastpunkt (AP) bestimmt wird,
(5) Auslösen des Antastens durch einen Bediener bei freigegebenem Antasten, Rückmeldung an den Bediener zum Fortschritt des Einmessvorgangs und Bestimmen von Koordinaten des Antastpunktes (AP),
(6) Neuberechnung der Lage des Werkstücks (WS) mittels der Koordinaten des Antastpunktes (AP) und Aktualisierung der Lage des virtuellen Werkstücks (vWS) im virtuellen Arbeitsraum (vA),
(7) Wiederholen der Schritte (3) - (6), bis eine finale Übereinstimmung der Lage des virtuellen Werkstücks (vWS) im virtuellen Arbeitsraum (vA) mit der Lage des Werkstücks (WS) im Arbeitsraum (A) erreicht ist.

2. Verfahren nach Anspruch 1, nach dem im Schritt (4) zur Bestimmung der Qualität eine Abweichung der Antastrichtung (AR) von den Flächennormalen des Werkstücks (WS) in der Nähe des Antastpunktes (AP) herangezogen wird, wobei diese Abweichungen höchstens 30°, bevorzugt höchstens 20°, besonders bevorzugt höchstens 10° betragen darf, um den Antastpunkt mit ausreichender Qualität zu beurteilen.

3. Verfahren nach Anspruch 1 oder 2, nach dem im Schritt (4) Antastpunkte (AP) auf Kanten des Werkstücks (WS) vom Antasten ausgeschlossen und mit nicht ausreichender Qualität bestimmt werden.

4. Verfahren nach einem der vorhergehenden Ansprüche, nach dem im Schritt (4) ein Hinweis auf die Freigabe bzw. nicht Freigabe grafisch auf dem Bildschirm (BS) angezeigt wird.

5. Verfahren nach einem der vorhergehenden Ansprüche, nach dem im Schritt (6) auf dem Bildschirm (BS) zusätzlich eine Information über die bereits erreichte Übereinstimmung zwischen der Lage des virtuellen Werkstücks (vWS) und des Werkstücks (WS) des Verfahrens angezeigt wird.

6. Verfahren nach Anspruch 5, nach dem der Verlauf der durch den jeweiligen Antastpunkt (AP) bewirkten Korrektur der Lage des virtuellen Werkstücks (vWS) für mehrere der bereits abgearbeiteten Antastpunkte (AP) angezeigt wird.

7. Verfahren nach Anspruch 5 oder 6, nach dem im virtuellen Arbeitsraum (vA) jeder Antastpunkt (AP) dauerhaft angezeigt wird.

8. Numerische Steuerung (NC) für eine Werkzeugmaschine (WS), eingerichtet zum Durchführen eines Verfahrens nach einem der vorhergehenden Ansprüche.

## Claims

1. Method for aligning a workpiece (WS) in the working space (A) of a machine tool (WM) having a numerical control means (NC) using a probe (T), comprising the steps of:
(1) providing 3D models of the working space (A), the probe (T) and the workpiece (WS) and displaying these models as a virtual workpiece (vWS) and a virtual probe (vT) in a virtual working space (vA) on a screen (BS) of the numerical control means (NC),
(2) positioning the workpiece (WS) in the working space (A) of the machine tool (WM) and the virtual workpiece (vWS) in the virtual working space (vA), so that a position of the workpiece (WS) in the working space (A) and the position of the virtual workpiece (vWS) in the virtual working space (vA) initially match,
(3) manually positioning the probe (T) relative to the workpiece (WS), thereby automatically selecting a planned probing point (AP) and a probing direction (AR) based on a distance between the virtual probe (vT) and the virtual workpiece (vWS), and displaying the planned probing point (AP) and the probing direction (AR) in the virtual working space (vA),
(4) determining a quality of the planned probing point (AP) and enabling probing at a sufficient quality, the quality being determined at least on the basis of the local curvature of the virtual workpiece (vWS) at the planned probing point (AP),
(5) triggering the probing by an operator when probing is enabled, providing feedback to the operator on the progress of the aligning process and determining coordinates of the probing point (AP),
(6) recalculating the position of the workpiece (WS) using the coordinates of the probing point (AP) and updating the position of the virtual workpiece (vWS) in the virtual working space (vA),
(7) repeating steps (3) - (6) until a final match between the position of the virtual workpiece (vWS) in the virtual working space (vA) and the position of the workpiece (WS) in the working space (A) is achieved.

2. Method according to Claim 1, in accordance with which, in step (4), a deviation in the probing direction (AR) from the surface normals of the workpiece (WS) in the vicinity of the probing point (AP) is used for determining the quality, where these deviations may be at most 30°, preferably at most 20°, particularly preferably at most 10°, in order to assess the probing point with sufficient quality.

3. Method according to Claim 1 or 2, in accordance with which, in step (4), probing points (AP) on edges of the workpiece (WS) are excluded from probing and determined with insufficient quality.

4. Method according to any of the preceding claims, in accordance with which, in step (4), an indication of the enabling or non-enabling is displayed graphically on the screen (BS).

5. Method according to any of the preceding claims, in accordance with which, in step (6), information about the match already achieved between the position of the virtual workpiece (vWS) and the workpiece (WS) of the method is additionally displayed on the screen (BS).

6. Method according to Claim 5, in accordance with which the course of the correction of the position of the virtual workpiece (vWS) caused by the respective probing point (AP) is displayed for several of the probing points (AP) already executed.

7. Method according to Claim 5 or 6, in accordance with which each probing point (AP) is permanently displayed in the virtual working space (vA).

8. Numerical control means (NC) for a machine tool (WS), designed for carrying out a method according to any of the preceding claims.

## Revendications

1. Procédé de calibrage d'une pièce ouvrée (WS) dans l'espace de travail (A) d'une machine-outil (WM) à commande numérique (NC) au moyen d'un palpeur (T), comprenant les étapes suivantes :
(1) fourniture de modèles 3D de l'espace de travail (A), du palpeur (T) et de la pièce ouvrée (WS) et représentation de ces modèles sous forme de pièce ouvrée virtuelle (vWS) et de palpeur virtuel (vT) dans un espace de travail virtuel (vA) sur un écran (BS) de la commande numérique (NC),
(2) positionnement de la pièce ouvrée (WS) dans l'espace de travail (A) de la machine-outil (WM) et de la pièce ouvrée virtuelle (vWS) dans l'espace de travail virtuel (vA), de telle sorte qu'une position de la pièce ouvrée (WS) dans l'espace de travail (A) et la position de la pièce ouvrée virtuelle (vWS) dans l'espace de travail virtuel (vA) présentent une concordance initiale,
(3) positionnement manuel du palpeur (T) par rapport à la pièce ouvrée (WS), avec sélection automatisée d'un point de palpage (AP) et d'un sens de palpage (AR) planifiés en fonction de la distance entre le palpeur virtuel (vT) et la pièce ouvrée virtuelle (vWS), et représentation du point de palpage (AP) et du sens de palpage (AR) planifiés dans l'espace de travail virtuel (vA),
(4) détermination d'une qualité du point de palpage (AP) planifié et validation du palpage en présence d'une qualité suffisante, la qualité étant déterminée au moins à l'aide de la courbure locale de la pièce ouvrée virtuelle (vWS) au niveau du point de palpage (AP) planifié,
(5) déclenchement du palpage par un opérateur lorsque le palpage est validé, retour d'information à l'opérateur sur l'avancement du processus de calibrage et détermination des coordonnées du point de palpage (AP),
(6) nouveau calcul de la position de la pièce ouvrée (WS) au moyen des coordonnées du point de palpage (AP) et actualisation de la position de la pièce ouvrée virtuelle (vWS) dans l'espace de travail virtuel (vA),
(7) répétition des étapes(3) à (6) jusqu'à atteindre une concordance finale de la position de la pièce ouvrée virtuelle (vWS) dans l'espace de travail virtuel (vA) avec la position de la pièce ouvrée (WS) dans l'espace de travail (A).

2. Procédé selon la revendication 1, selon lequel, à l'étape (4) de détermination de la qualité, un écart du sens de palpage (AR) par rapport aux normales à la surface de la pièce ouvrée (WS) à proximité du point de palpage (AP) est utilisé, ces écarts pouvant être au maximum de 30°, de préférence au maximum de 20°, particulièrement de préférence au maximum de 10° afin d'évaluer le point de palpage avec une qualité suffisante.

3. Procédé selon la revendication 1 ou 2, selon lequel, à l'étape (4), les points de palpage (AP) sur les arêtes de la pièce ouvrée (WS) sont exclus du palpage et déterminés comme étant de qualité insuffisante.

4. Procédé selon l'une des revendications précédentes, selon lequel, à l'étape (4), une notification de la validation ou de la non-validation est affichée graphiquement sur l'écran (BS).

5. Procédé selon l'une des revendications précédentes, selon lequel, à l'étape (6), une information à propos de la concordance déjà atteinte entre la position de la pièce ouvrée virtuelle (vWS) et la pièce ouvrée (WS) du procédé est en plus affichée à l'écran (BS).

6. Procédé selon la revendication 5, selon lequel le déroulement de la correction de la position de la pièce ouvrée virtuelle (vWS) provoquée par le point de palpage (AP) respectif est affiché pour plusieurs des points de palpage (AP) déjà traités.

7. Procédé selon la revendication 5 ou 6, selon lequel chaque point de palpage (AP) est affiché en permanence dans l'espace de travail virtuel (vA).

8. Commande numérique (NC) pour une machine-outil (WS), conçue pour mettre en œuvre un procédé selon l'une des revendications précédentes.
